# EUROPÄISCHE PATENTSCHRIFT

(11) **EP 0 348 920 B1**
(45) Veröffentlichungstag und Bekanntmachung des Hinweises auf die Patenterteilung: **15.09.1993**
(21) Anmeldenummer: 89111720.2
(22) Anmeldetag: 28.06.1989
(51) Int. Cl.: G01M 3/18

(54) **Verfahren und Schaltung zur Überwachung von Rohren, insbesondere von Fernheizrohrleitungen auf Leckage**
Process and circuit for monitoring pipes, especially for detecting leaks in a heating pipe system
Procédé et circuit de surveillance de canalisations, en particulier pour détecter les fuites d'une canalisation de chauffage

(30) Priorität: 30.06.1988 DE 3822123
(43) Veröffentlichungstag der Anmeldung: 03.01.1990
(73) Patentinhaber: Brandes, Bernd, 24329 Grebin (DE)
(72) Erfinder: Brandes, Bernd, 24329 Grebin (DE)
(74) Vertreter: Blumbach Weser Bergen Kramer

(56) Entgegenhaltungen:
- DE-A- 2 337 983
- DE-A- 2 458 055
- DE-A- 3 225 742
- PATENT ABSTRACTS OF JAPAN, Band 3, Nr. 155 (E-160), 19. Dezember 1979;& JP-A-54 136 397 (HITACHI SEISAKUSHO K.K.)

## Beschreibung

Die Erfindung betrifft ein Verfahren und eine Schaltung zur Überwachung von Rohren, insbesondere von Fernheizrohrleitungen, auf Leckage, wobei Ströme durch Überwachungsschaltungen mit vorzugsweise Gleichrichterdioden und mindestens einem Indikator geschickt werden, dessen Widerstand sich bei dem Auftreten von Feuchtigkeit ändert.

Zur Ortung von Leckagen in Rohrleitungssystemen sind unterschiedliche Detektionsmethoden vorbekannt. Eine Möglichkeit besteht nach der DE-A-23 37 983 darin, parallel zur überwachenden Rohrleitung einen Metalldraht zu verlegen, der als Widerstandsdraht ausgebildet ist, an dem eine definierte Meßspannung angelegt wird. Tritt eine Leckage auf, so ändert sich der Widerstandswert der Meßstrecke, und aus dem geänderten Spannungsabfall über der Meßstrecke kann die Lage der Leckstelle leicht ermittelt werden.

Diese Überwachungsmethode versagt aber, wenn in dem zu überwachenden Leitungssystem isolierende Medien transportiert werden. Die DE-A-24 58 055 schlägt für solche Leitungen die Messung der Kapazität eines aus dem Leitungsrohr und einem isolierten Meldedraht oder aus zwei isolierten, an dem Leitungsrohr anliegenden Leitern gebildeten Kondensators vor. Tritt eine Leckage auf, so wird der Raum zwischen den Kondensatorplatten mit dem Medium gefüllt, und die Kapazität des Kondensators ändert sich. Erreicht die Kapazitätsänderung einen Schwellenwert, so wird Alarm ausgelöst.

Um das Ansprechverhalten des Sensors zu steuern, schlägt die DE-A-24 58 055 weiter vor, zwischen die Kondensatorplatten ein poröses Material, beispielsweise einen offenzelligen Schaumstoff, einzubringen.

Möchte man das kapazitive Meßverfahren nach der DE-A-24 58 055 auch für Rohre anwenden, die ein leitendes Medium führen, insbesondere für Fernheizrohre, so ergibt sich zunächst einmal die Schwierigkeit, daß von den Sensoren zum einen kleine Feuchtigkeitsmengen ignoriert werden sollen, zum anderen bei Erreichen eines voreingestellten Schwellwertes ein schnelles Ansprechen gewährleistet ist. Diese Schwierigkeit glaubte man vorbekanntermaßen dadurch überwinden zu können, daß man die Leitungen voll isoliert ausführte, die Leckagesensoren an bestimmten Stellen mit einer großen Fläche versah und als Material für die Füllung des Sensors Polyurethanschaum verwandte, in dem geringe Feuchtigkeitsmengen an den Stirnseiten der Rohrisolierungen chemisch gebunden werden konnten. Die Meßschaltung bzw. das Fühlersystem wurden dabei elektrisch isoliert gehalten, d.h. eine Verbindung beispielsweise zum Rohrpotential wurde vermieden, um somit eine Art "potentialfreies" Messen zu ermöglichen und somit von anderen Spannungseinflüssen unabhängig zu sein.

Es hat sich jedoch bei diesem Verfahren als nachteilig herausgestellt, daß an den Indikatoren ein Kurzschluß auftrat und damit ein Funktionsausfall verursacht wurde. Hierfür wurden Bearbeitungsungenauigkeiten, wie Gratbildung oder das Vorhandensein von Salzen in dem Schaummaterial der Indikatoren, verantwortlich gemacht.

Diese Nachteile versuchte man wie bekannt dadurch zu überwinden, daß man den Plattenabstand der Indikatoren vergrößerte, um damit einen möglichen Kurzschluß durch Gratbildung oder Zersetzungsprodukte zu vermeiden. Diese Maßnahme beeinträchtigt jedoch die Sensibilität der Indikatoren, und es besteht die Gefahr einer zu späten Meldung im Fall einer Rohrleckage.

Der Erfindung liegt daher die Aufgabe zugrunde, ein Verfahren verfügbar zu machen, das eine Überwachung von Rohren ermöglicht, bei dem Störungen durch Kurzschlüsse an den Indikatoren vermieden werden und eine hohe Meldeempfindlichkeit gegenüber Feuchte nach wie vor gewährleistet, sowie eine Anwendung auf bereits fertig verlegte Kabel möglich ist.

Der Erfindung liegt die Erkenntnis zugrunde, daß Korrosion an den Indikatoren die Kurzschlüsse hervorruft. Korrosion der Materialien wird durch das Auftreten induktiv oder kapazitiv eingekoppelter Streuströme verursacht. Die Meßschaltung ist damit nicht wie gewünscht und erwartet "potentialfrei". Demgemäß schlägt die Erfindung ein Verfahren der eingangs genannten Art vor, bei dem parallel zu den Indikatoren der Überwachungsschaltung eine Kurzschlußeinrichtung angeschlossen ist, die die Indikatoren überbrückt, damit eine unkontrollierbare, durch induktiv und/oder kapazitiv eingekoppelte Streuströme verursachte Korrosion der Indikatoren vermieden wird.

Vorteilhafterweise ist eine Gleichrichterdiode und ein Widerstand an einem Ende der Überwachungsschaltung vorgesehen, und parallel zu den Indikatoren an einer der Gleichrichterdioden und am dem Widerstand gegenüberliegenden Ende der Überwachungsschaltung die Kurzschlußeinrichtung angeschlossen, die die Indikatoren kurzschließt.

Zur Durchführung des Verfahrens ist zweckmäßigerweise vorgesehen, daß eine Meßstrecke neben dem Mediumtransportrohr verläuft, die zwei nebeneinander verlaufende Adern und mindestens einen dazwischengeschalteten Indikator aufweist, und daß die Kurzschlußeinrichtung, die die Adern an einem Ende der Meßstrecke kurzschließt, die dazwischengeschalteten Indikatoren überbrückt.

Alternativ zu der ersten Schaltungsanordnung kann die Meßstrecke das Mediumtransportrohr als eine Ader, eine weitere Ader sowie mindestens einen dazwischengeschalteten Indikator aufweisen, und die Kurzschlußeinrichtung schließt die Meßstrecke an einem Ende unter Verbinden der Ader mit dem Mediumtransportrohr so kurz, daß die dazwischengeschalteten Indikatoren überbrückt sind.

Ist die Meßschaltung mit einem Widerstand und einer Gleichrichterdiode an einem Ende der Meßstrecke ausgestattet, so wird mit Vorteil vorgesehen, daß die Kurzschlußeinrichtung, die beiden Adern bzw. die Ader und das Mediumtransportrohr an dem dem Widerstand und der Gleichrichterdiode entgegengesetzten Ende der Meßstrecke überbrückt.

Als Kurzschlußeinrichtung kann zweckmäßig ein Kondensator als Brücke vorgesehen sein, der parallel zur Gleichrichterdiode geschaltet ist.

Ist eine Vielzahl von parallel angeordneten Meßstrecken vorgesehen, so sind mit Vorteil die Enden der Meßstreckenabschnitte kurzgeschlossen.

Zweckmäßig sind zum Kurzschließen der für die Meßstrecken Brückenschalter oder Brückenstecker vorgesehen.

In ihrer Weiterbildung schlägt die Erfindung vor, daß an dem meßseitigen Ende der Meßstrecke eine Meßeinrichtung vorgesehen ist, die während des Meßvorgangs den Kurzschluß aufhebt.

Mit Vorteil umfaßt die Meßeinrichtung eine Meßelektronik mit eigenem Akku.

Eine andere Ausführungsform der Erfindung sieht vor, daß der Brückenschalter auch während des Meßvorgangs einen Kurzschluß herstellt und die Messung gegen das zu überwachende Rohr erfolgt. Der Brückenschalter wird dann nur zur Messung des Leitungsdurchgangs geöffnet.

In an sich bekannter Weise wird in weiterer Fortbildung der Erfindung mit Widerständen zwischen Vorlauf und Rücklauf die Kennung eines Leiterabrisses in der Überwachungsschaltung erreicht.

Mit der Erfindung wird ein vorzeitiger Funktionsausfall der Indikatoren und ein damit erforderlicher Austausch der Indikatoren, wobei die Leitungen aufgegraben werden müssen, vermieden. Die Erfindung ist universell einsetzbar und verursacht wenig Kosten. Die Meldeschwelle kann bei den Maßnahmen gemäß der Erfindung sehr weit abgesenkt werden.

Die Erfindung soll nachstehend unter Bezugnahme auf die beigefügten Zeichnungen beispielhaft näher erläutert werden. In den Zeichnungen zeigen:
- Fig. 1: eine Meßschaltung mit parallel angeordnetem Meßstreckenabschnitt, wobei erfindungsgemäß ein Kurzschluß hergestellt ist;
- Fig. 2: eine Weiterbildung der erfindungsgemäßen Meßschaltung in schematischer Darstellung;
- Fig. 3: eine Meßeinrichtung und ihren Anschluß an die Meßschaltung.

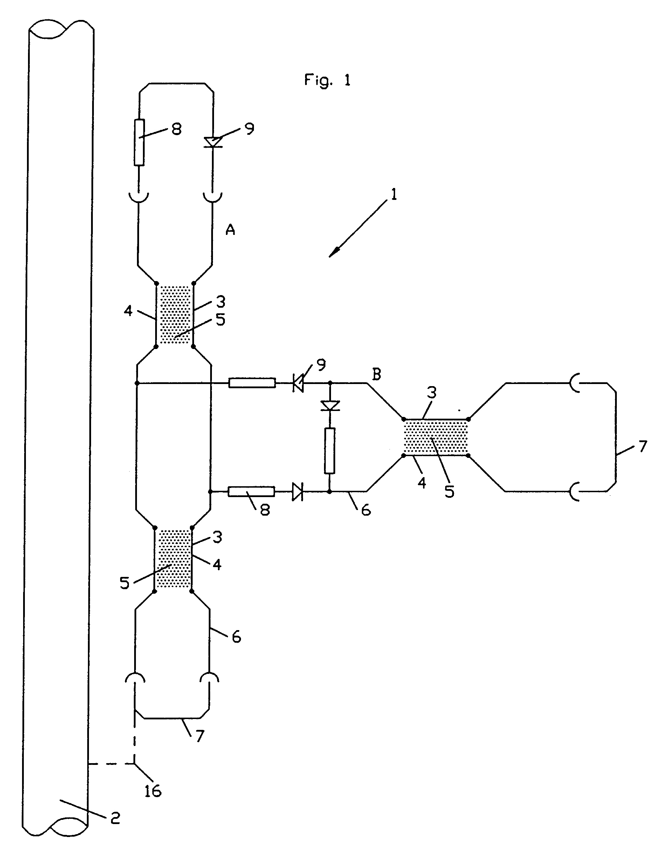

In Fig. 1 ist eine Meßschaltung 1 dargestellt mit den beiden Meßstreckenabschnitten A und B. Es können weitere Meßstreckenabschnitte vorgesehen sein, die durch die entsprechenden Diodenschaltungen und den damit erforderlichen Durchbruchsspannungen sogenannte Leitungshierarchien bilden. Für den Meßstreckenabschnitt A der Meßschaltung 1 ist die zugehörige Fernheizrohrleitung 2 dargestellt, die auf Leckage überwacht werden soll.

Die Indikatoren 3 bestehen aus gegenüberliegend angeordneten Metallplatten 4, zwischen denen ein Schaumstoff 5 angeordnet ist. Tritt bei der Fernheizrohrleitung 2 eine Leckage auf, so erhöht sich die Feuchte im Schaumstoff 5, und zwischen den Platten 4 der Indikatoren 3 wird ein Kurzschluß erzeugt.

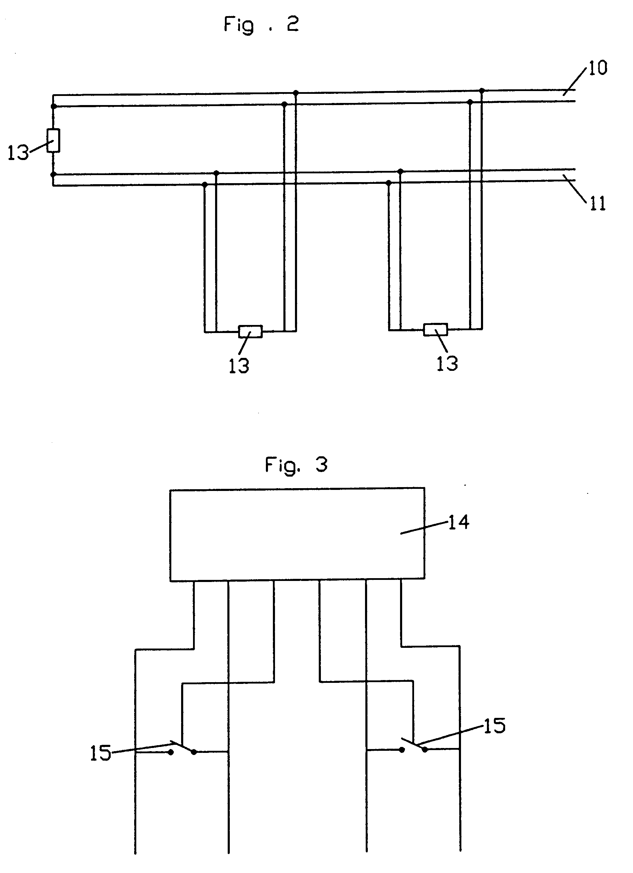

Um zu verhindern, daß an den Platten der Indikatoren 3 durch induktiv oder kapazitiv eingekoppelte Streuströme in den Leitungsadern 6 Kurzschlüsse auftreten, die die Indikatoren 3 funktionsunfähig machen, sind an den Enden der Meßstrecke Kurzschlußeinrichtungen 7 vorgesehen, die als Brückenstecker ausgebildet sein können. Für den Fall, daß Meßstreckenabschnitte einen Widerstand 8 und eine Gleichrichterdiode 9 aufweisen, ist die Kurzschlußeinrichtung 7 an dem Widerstand 8 und der Gleichrichterdiode 9 entgegengesetzten Ende der Meßstrecke vorgesehen, um diese kurzzuschließen. Wie Fig. 2 zeigt, sind zwischen dem Vorlauf 10 und dem Rücklauf 11 in der Meßschaltung Widerstände 13 angeordnet, um einen Abriß im Netz erkennen zu können.

Wie im einzelnen aus Fig. 3 zu entnehmen ist, ist am meßseitigen Ende der Meßstrecke eine Meßeinrichtung 14 vorgesehen, der Meßbrückenschalter 15 zugeordnet sind. Mit diesen Meßbrückenschaltern 15 wird der Kurzschluß während des Meßvorgangs durch die Meßeinrichtung 14 aufgehoben. Die Meßeinrichtung 14 enthält eine im einzelnen nicht näher dargestellte Meßelektronik mit einem eigenen Akku.

Gemäß einer anderen Ausführungsform der Erfindung kann auf die Meßbrückenschalter 15 verzichtet und die Messung gegen die zu überwachende Fernheizrohrleitung 2 durchgeführt werden, wie durch die gestrichelte Ader 16 in Fig. 1 dargestellt ist.

Die erfindungsgemäße Schaltung kann sowohl bei isolierten Meßschaltungen als auch bei einer Messung gegen das zu überwachende Fernheizrohr Anwendung finden. Neben der Anwendung bei Neuinstallationen bereitet es auch verhältnismäßig geringe Schwierigkeiten, bisher bestehende Meßschaltungen erfindungsgemäß umzurüsten.

Mit den erfindungsgemäßen Maßnahmen wird auch die Gefahr der Ausbildung undefinierter Streuströme vermieden, die sonst bei der Meßschaltung mit den Dioden 9 dadurch entsteht, daß die Diode 9 in der einen Richtung den Stromfluß auf ihre Durchbruchsspannung begrenzt, während in der anderen Richtung ein Potential vorhanden war, das korrodierend auf die Indikatoren 3 einwirken konnte.

## Patentansprüche

1. Verfahren zur Überwachung von Rohren, insbesondere von Fernheizrohrleitungen, auf Leckage, wobei Ströme durch Überwachungsschaltungen (1) mit vorzugsweise Gleichrichterdioden und mit mindestens einem Indikator (3) geschickt werden, dessen Widerstand sich beim Auftreten von Feuchtigkeit ändert,
dadurch gekennzeichnet,
daß parallel zu den Indikatoren (3) der Überwachungsschaltung (1) eine Kurzschlußeinrichtung (7) angeschlossen wird, die die Indikatoren (3) überbrückt, um eine unkontrollierbare, durch induktiv und/oder kapazitiv eingekoppelte Streuströme verursachte Korrosion der Indikatoren (3) zu vermeiden.

2. Verfahren nach Anspruch 1,
dadurch gekennzeichnet,
daß eine Gleichrichterdiode (9) und ein Widerstand (8) an einem Ende der Überwachungsschaltung vorgesehen sind und
daß, parallel zu den Indikatoren (3), an einer der Gleichrichterdioden (9) und dem Widerstand (8) gegenüberliegenden Ende der Überwachungsschaltung die Kurzschlußeinrichtung (7) angeschlossen wird, die die Indikatoren kurzschließt.

3. Schaltung zur Durchführung des Verfahrens nach Anspruch 1 oder 2,
gekennzeichnet durch
eine neben dem Medium-Transportrohr (2) verlaufende Meßstrecke (A, B), die zwei nebeneinander verlaufende Adern (6) und mindestens einen dazwischengeschalteten Indikator (3) aufweist, und
durch die Kurzschlußeinrichtung (7), die die Adern (6) an einem Ende der Meßstrecke (A, B) kurzschließt, so daß die dazwischengeschalteten Indikatoren (3) überbrückt werden.

4. Schaltung zur Durchführung des Verfahrens nach Anspruch 1 oder 2
gekennzeichnet durch
eine Meßstrecke (A, B), die das Medium-Transportrohr (2) als eine Ader, eine weitere Ader (6) sowie mindestens einen dazwischengeschalteten Indikator (3) aufweist und,
durch die Kurzschlußeinrichtung (7), die die Meßstrecke an einem Ende unter Verbinden der Ader (6) mit dem Medium-Transportrohr (2) kurzschließt, so daß die dazwischengeschalteten Indikatoren überbrückt sind.

5. Schaltung nach Anspruch 3 oder 4,
gekennzeichnet durch
eine Gleichrichterdiode (9) und einen Widerstand (8) an einem Ende der Meßstrecke und
durch die Kurzschlußeinrichtung (7), die die beiden Adern (6) bzw. die Ader (6) und das Medium-Transportrohr (2) an dem dem Widerstand (8) und der Gleichrichterdiode (9) entgegengesetzten Ende der Meßstrecke (A, B) überbrückt.

6. Schaltung nach einem der Ansprüche 3 bis 5,
dadurch gekennzeichnet,
daß die Kurzschlußeinrichtung ein Kondensator ist.

7. Schaltung nach Anspruch 6,
dadurch gekennzeichnet,
daß der als Kurzschluß wirkende Kondensator parallel zur Gleichrichterdiode (9) geschaltet ist.

8. Schaltung nach einem der Ansprüche 3 bis 7,
gekennzeichnet durch
eine Vielzahl von parallel angeordneten Meßstrecken (A, B) und durch Kurzschlußeinrichtungen (7), die die Enden der Meßstreckenabschnitte (A, B) kurzschließen.

9. Schaltung nach einem der Ansprüche 3 bis 8,
dadurch gekennzeichnet,
daß als Kurzschlußeinrichtungen für die Meßstrecken (A, B) Brückenschalter (15) oder Brückenstecker (7) vorgesehen sind.

10. Schaltung nach einem der Ansprüche 3 bis 6,
dadurch gekennzeichnet,
daß an dem meßseitigen Ende der Meßstrecke (A, B) eine Meßeinrichtung (14) vorgesehen ist, die während des Meßvorgangs den Kurzschluß aufhebt.

11. Schaltung nach Anspruch 10,
dadurch gekennzeichnet,
daß die Meßeinrichtung (14) eine Meßelektronik mit eigenem Akku umfaßt.

12. Schaltung nach einem der Ansprüche 3 bis 9,
dadurch gekennzeichnet,
daß der Brückenschalter (15) auch während des Meßvorgangs einen Kurzschluß herstellt und die Messung gegen das zu überwachende Rohr (7, 2) erfolgt.

13. Schaltung nach einem der Ansprüche 3 bis 12,
dadurch gekennzeichnet,
daß in an sich bekannter Weise mit Widerständen (13) zwischen Vorlauf (10) und Rücklauf (11) die Erkennung eines Leiterabrisses in der Überwachungsschaltung erfolgt.

## Claims

1. A method of monitoring pipes, more particularly district heating pipes, for leakage, currents being sent through monitoring circuits (1) preferably comprising rectifier diodes and at least one indicator (3) having a resistance which alters in the presence of moisture, characterised in that a short-circuit device (7) is connected in parallel with the indicators (3) in the monitoring circuit (1) and short-circuits the indicators (3) in order to prevent uncontrollable corrosion thereof through inductively and/or capacitively coupled leakage currents.

2. A method according to claim 1, characterised in that a rectifier diode (9) and a resistor (8) are provided at one end of the monitoring circuit and the short-circuit device (7) for short-circuiting the indicators is connected in parallel with the indicators (3) to an end of the monitoring circuit remote from the rectifier diodes (9) and the resistor (8).

3. A circuit for working the method according to claim 1 or 2, characterised by a measuring section (A, B) extending alongside the medium-conveying pipe (2) and comprising two adjacent cores (6), at least one indicator (3) in between, and by the short-circuit device (7), which short-circuits the cores (6) at one end of the measuring section (A, B) so as to bridge the indicators (3) connected in between.

4. A circuit for working the method according to claim 1 or 2, characterised by a measuring section (A, B) comprising one core in the form of the medium-conveying pipe (2), a second core (6) and at least one indicator (3) in between, and by the short-circuit device (7), which short-circuits the measuring section at one end by connecting the core (6) to the medium-conveying pipe (2), so as to bridge the indicators connected inbetween.

5. A circuit according to claim 3 or 4, characterised by a rectifier diode (9) and a resistor (8) at one end of the measuring section and by the short-circuit device (7), which bridges the two cores (6) or the core (6) and the medium-conveying pipe (2) at the end of the measuring section (A, B) remote from the resistor (8) and the rectifier diode (9).

6. A circuit according to any of claims 3 to 5, characterised in that the short-circuit device is a capacitor.

7. A circuit according to claim 6, characterised in that the capacitor acting as a short-circuit is connected in parallel with the rectifier diode (9).

8. A circuit according to any of claim 3 to 7, characterised by a number of parallel-connected measuring sections (A, B) and by short-circuit devices (7) which short-circuit the ends of the portions (A, B) of the measuring section.

9. A circuit according to any of claims 3 to 8, characterised in that bridge switches (15) or bridge plugs (7) are provided as short-circuit devices for the measuring sections (A, B).

10. A circuit according to any of claims 3 to 6, characterised in that a measuring device (14) is provided at that end of the measuring section (A, B) which is used for measurement, and interrupts the short-circuit during the measuring process.

11. A circuit according to claim 10, characterised in that the measuring device (14) comprises a measuring electronic unit with a separate accumulator.

12. A circuit according to any of claims 3 to 9, characterised in that the bridge switch (15) produces a short-circuit during the measuring process also and the measurement is made relative to the pipe (7, 2) for monitoring.

13. A circuit according to any of claims 3 to 12, characterised in that a break of a conductor in the monitoring circuit is detected in known manner by resistors (13) between the outward flow (10) and the return flow (11).

## Revendications

1. Procédé de surveillance de canalisations, en particulier de canalisation de chauffage à distance, pour détecter les fuites, où des courants sont émis par des circuits de surveillance (1) munis de préférence de diodes de redressement et d'au moins un indicateur (3) dont la résistance est modifiée en cas d'apparition d'humidité,
caractérisé par le fait que
l'on raccorde en parallèle aux indicateurs (3) du circuit de surveillance (1) un dispositif de court-circuit (7) qui shunte les indicateurs (3) afin d'éviter une corrosion incontrôlable des indicateurs due à des courants de fuite créés par couplage inductif et/ou capacitif.

2. Procédé selon la revendication 1,
caractérisé par le fait que
une diode de redressement (9) et une résistance (8) sont prévues à une extrémité du circuit de surveillance et
que le dispositif de court-circuit (7) qui shunte les indicateurs est raccordé en parallèle aux indicateurs (3), à une extrémité du dispositif de surveillance placée en face de l'une des diodes de redressement (9) et de la résistance (8).

3. Un circuit pour la réalisation du procédé selon la revendication 1 ou 2,
caractérisé par
une section de mesure (A, B) placée à côté de la canalisation de transport du fluide (2) et qui présente deux conducteurs (6) placés l'un à côté de l'autre et séparés par au moins un indicateur (3) et
par le dispositif de court-circuit (7) qui shunte les conducteurs (6) à une extrémité de la section de mesure (A, B) de sorte que les indicateurs qui les séparent soient court-circuités.

4. Un circuit pour la réalisation du procédé selon la revendication 1 ou 2,
caractérisé par
une section de mesure (A, B) qui présente la canalisation de transport du fluide (2) comme l'un des conducteurs, un autre conducteur (6), ainsi qu'au moins un indicateur (3) qui les sépare et
par le dispositif de court-circuit (7) qui shunte la section de mesure à une extrémité en reliant le conducteur (6) avec la canalisation de transport du fluide (2), de sorte à court-circuiter les indicateurs qui les séparent.

5. Un circuit selon la revendication 3 ou 4,
caractérisé par
une diode de redressement (9) et une résistance (8) à une extrémité de la section de mesure et
par le dispositif de court-circuit (7) qui shunte les deux conducteurs (6), respectivement le conducteur (6) et la canalisation de transport du fluide (2), avec l'extrémité de la section de mesure (A, B) qui est placée en face de la résistance (8) et de la diode de redressement (9).

6. Un circuit selon l'une des revendications 3 à 5,
caractérisé par le fait que
le dispositif de court-circuit est un condensateur.

7. Un circuit selon la revendication 6,
caractérisé par le fait que
le condensateur servant de court-circuit est branché en parallèle sur la diode de redressement (9).

8. Un circuit selon l'une des revendications 3 à 7,
caractérisé par
une multitude de sections de mesure (A, B) disposées en parallèle et par des dispositifs de court-circuit (7) qui shuntent les extrémités des diverses sections de mesures (A, B).

9. Un circuit selon l'une des revendications 3 à 8,
caractérisé par le fait que
les dispositifs de court-circuit pour les sections de mesure (A, B) sont constitués par des interrupteurs de court-circuit (15) ou par des cavaliers de court-circuit (7).

10. Un circuit selon l'une des revendications 3 à 6,
caractérisé par le fait que
sur le côté mesure de la section de mesure (A, B) est prévu un dispositif de mesure (14) qui supprime le court-circuit lors de la mesure.

11. Un circuit selon la revendication 10;
caractérisé par le fait que
le dispositif de mesure (14) comprend une électronique de mesure avec son propre accumulateur.

12. Un circuit selon l'une des revendications 3 à 9,
caractérisé par le fait que
l'interrupteur de court-circuit (15) réalise également un court-circuit pendant la mesure et que la mesure est effectuée par rapport à la canalisation (7, 2) à surveiller.

13. Un circuit selon l'une des revendications 3 à 12,
caractérisé par le fait que
la détection d'une rupture de conducteur dans le circuit de surveillance est réalisée de manière connue avec des résistances (13) placées entre les lignes d'attaque (10) et de retour (11).
